# EUROPÄISCHE PATENTSCHRIFT

(11) **EP 2 534 021 B1**
(45) Veröffentlichungstag und Bekanntmachung des Hinweises auf die Patenterteilung: **08.01.2014**
(21) Anmeldenummer: 11704579.9
(22) Anmeldetag: 09.02.2011
(51) Int. Cl.: B60T 8/1766, B60T 8/1761

(54) **VERFAHREN ZUM BETREIBEN EINER BREMSSCHLUPFREGELUNG EINES BREMSSYSTEMS EINES FAHRZEUGS**
METHOD FOR OPERATING A BRAKE-SLIP REGULATING MEANS OF A BRAKE SYSTEM OF A VEHICLE
PROCÉDÉ POUR FAIRE FONCTIONNER UN RÉGULATEUR D'ANTIBLOCAGE DES ROUES D'UN SYSTÈME DE FREINAGE D'UN VÉHICULE

(30) Priorität: 10.02.2010 DE 102010007409
(43) Veröffentlichungstag der Anmeldung: 19.12.2012
(73) Patentinhaber: Knorr-Bremse Systeme für Nutzfahrzeuge GmbH, 80809 München (DE)
(72) Erfinder: WIEDER, Gerhard, 74354 Besigheim (DE); MUSTAPHA, Adnan, 75433 Maulbronn (DE)
(74) Vertreter: Schönmann, Kurt
(86) Internationale Anmeldenummer: PCT/EP2011/051878
(87) Internationale Veröffentlichungsnummer: WO 2011/098475

(56) Entgegenhaltungen:
- EP-A1- 1 070 623
- EP-A1- 1 419 946
- EP-A2- 0 475 010
- DE-A1- 19 601 529
- DE-A1-102006 024 617

## Beschreibung

Die Erfindung betrifft ein Verfahren zum Betreiben einer Bremsschlupfregelung eines Bremssystems eines Fahrzeugs in verschiedenen Betriebsarten wie einer Straßenbetriebsart und einer Geländebetriebsart abhängig von Fahrbedingungen, wobei in der Straßenbetriebsart die Bremsschlupfregelung an wenigstens einer Hinterachse und einer Vorderachse in Betrieb gesetzt ist, gemäß dem Oberbegriff von Anspruch 1.

Ein solches Verfahren ist aus der DE 10 2006 035 604 A1 sowie aus der EP 1 419 946 A1 bekannt, wobei dort als eine Geländebetriebsart eine Fahrbetriebsart bezeichnet wird, bei der die relevanten Fahrzeuguntersysteme in bestimmter Weise eingestellt werden, beispielsweise wird ein Sollschlupfwert eines Antriebsschlupfsystems (ASR) erhöht, das Lenkungssystem für ein Steuern bei niedrigen Geschwindigkeiten sowie eine Federungseinrichtung angepasst. Weiterhin wird die minimale Fahrgeschwindigkeit erhöht, bei welcher ein Anti-Blockier-System (ABS) aktiviert wird, d.h. das ABS wird gegenüber einer Straßenbetriebsart erst ab einer höheren Schwellgeschwindigkeit aktiv, dann aber an allen Achsen bzw. Rädern.

Weiterhin sind Fahrzeuge mit Bremsanlagen bekannt, bei welchen das ABS in der Geländebetriebsart an allen Rädern bzw. Achsen vollständig deaktiviert wird bzw. Fahrzeuge mit Bremsanlagen gänzlich ohne ABS. Jedoch existieren gesetzliche Regelungen, beispielsweise ECE R13 Annex 10, Diagramme 1B, 1C), wonach bestimmte Kraftschlussbeiwerte für beladene und unbeladene Fahrzeuge eingehalten werden müssen. Dies hat zur Folge, dass bei solchen Fahrzeugen die Bremskraft lastabhängig verteilt werden muss, um die Bremskraft lastabhängig auf die Vorder- bzw. Hinterachse zu verteilen bzw. um zu vermeiden, dass die Räder der Hinterachse zeitlich vor den Rädern der Vorderachse blockieren, was die Fahrstabilität negativ beeinflussen würde.

So sind aus dem Stand der Technik, beispielsweise aus der DE 10 2006 045 317 A1 sog. EBD-Regelungen (Electronic Brakeforce Distribution) bekannt, bei welchen bei einem Bremsvorgang die Hinterachsbremsen aufgrund des Schlupfes an wenigstens einem Hinterrad von einem weiteren Druckaufbau abgesperrt werden. Eine solche Regelung erfordert jedoch eine Lasterfassung wie ein LSV (load sensing valve) zum Detektieren der Lastverteilung, was einen gewissen Aufwand erfordert.

Der Erfindung liegt demzufolge die Aufgabe zugrunde, ein Verfahren der eingangs erwähnten Art derart fortzubilden, dass in der Geländebetriebsart eine möglichst hohe Fahrstabilität vorliegt und dass dieses Verfahren mit möglichst einfachen Mitteln realisierbar ist.

Diese Aufgabe wird erfindungsgemäß durch die Merkmale von Anspruch 1 gelöst.

### Offenbarung der Erfindung

Die Erfindung basiert auf dem Gedanken, dass auch in der Geländebetriebsart die Bremsschlupfregelung an wenigstens einer Hinterachse des Fahrzeugs solange in Betrieb bleibt, bis der Bremsschlupf an wenigstens einem Rad einer Vorderachse kleiner oder gleich einer vorgegebenen Bremsschlupfgrenze ist und dass bei einem Überschreiten der vorgegebenen Bremsschlupfgrenze durch den Bremsschlupf an dem wenigstens einen Rad der Vorderachse die Bremsschlupfregelung an der wenigstens einen Hinterachse außer Betrieb gesetzt und erst dann wieder in Betrieb gesetzt wird, wenn der Bremsschlupf an dem wenigstens einen Rad der Vorderachse wieder kleiner oder gleich der vorgegebenen Bremsschlupfgrenze ist.

Als die an dem wenigstens einem Rad der Vorderachse vorgegebene Bremsschlupfgrenze wird bevorzugt ein Bremsschlupfwert gesetzt, welcher im wesentlichen einem Blockieren des Rades entspricht.

Mit anderen Worten bleibt das ABS an den Rädern der wenigstens einen Hinterachse solange aktiviert bis wenigstens ein Rad der Vorderachse zum Blockieren neigt bzw. in einem blockiemahen- oder ähnlichen Zustand gerät, in dem der Bremsschlupf des betreffenden Vorderrades unzulässig hoch ist. Erst, wenn wenigstens eines der Räder der Vorderachse blockiert, wird das ABS an der Hinterachse deaktiviert bzw. außer Betrieb gesetzt und erst dann wieder aktiviert, wenn an dem oder an den Rädern der Vorderachse kein Blockierzustand beim Bremsen mehr vorliegt.

Dadurch werden zuverlässig instabile Fahrzustände vermieden, bei welchen die Räder der Hinterachse zeitlich vor den Rädern der Vorderachse blockieren. Weiterhin sind zur Realisierung des erfindungsgemäßen Verfahrens keine zusätzlichen Sensoren oder Bauelemente erforderlich, weil die im Rahmen von ABS ohnehin vorhandenen Raddrehzahlsensoren an der Rädern der Vorderachse zusammen mit der ermittelten Fahrzeugreferenzgeschwindigkeit die Information darüber liefern, ob die Räder der Vorderachse blockieren. Insgesamt ist das gesamte Verfahren innerhalb des bestehenden ABS-Steuergeräts implementierbar.

Durch die in den Unteransprüchen aufgeführten Maßnahmen sind vorteilhafte Weiterbildungen und Verbesserungen der in Anspruch 1 angegebenen Erfindung möglich.

Besonders bevorzugt wird in der Geländebetriebsart die Bremsschlupfregelung an dem wenigstens einen Rad der Vorderachse außer Betrieb gesetzt, mit der Ausnahme, dass die Signale eines Raddrehzahlsensors des wenigstens einen Rades der Vorderachse herangezogen werden, um festzustellen, ob der Bremsschlupf an dem wenigstens einen Rad der Vorderachse kleiner, gleich oder größer als die vorgegebene Bremsschlupfgrenze ist.

Gemäß einer Alternative bleibt auch in der Geländebetriebsart die Bremsschlupfregelung an dem wenigstens einen Rad der Vorderachse in Betrieb gesetzt, wobei im Rahmen der an dem wenigstens einen Rad der Vorderachse in Betrieb gesetzt bleibenden Bremsschlupfregelung die Signale des Raddrehzahlsensors des wenigstens einen Rades der Vorderachse herangezogen werden, um festzustellen, ob der Bremsschlupf an dem wenigstens einen Rad der Vorderachse kleiner, gleich oder größer als die vorgegebene Bremsschlupfgrenze ist.

Dabei wird die Geländebetriebsart der Bremsschlupfregelung von einer die Fahrbedingungen des Fahrzeugs mittels Sensorik überwachenden Überwachungseinrichtung automatisch, d.h. ohne Zutun des Fahrers aktiviert, beispielsweise wenn die Sensorik aufgrund der gefahrenen Geschwindigkeit, der Einfederung des Fahrzeugs oder von Beschleunigungssignalen in Vertikalrichtung erkennt, dass das Fahrzeug im Gelände im Gegensatz zu einer ebenen Straße bewegt wird. Alternativ kann die Geländebetriebsart natürlich auch von einer Bedienperson bzw. dem Fahrer des Fahrzeugs mittels einer geeigneten Eingabevorrichtung aktiviert werden.

Die im Rahmen der Geländebetriebsart im Betrieb belassene oder befindliche Bremsschlupfregelung an der wenigstens einen Hinterachse des Fahrzeugs kann insbesondere auf einen gegenüber der Straßenbetriebsart höheren Bremsschlupf-Sollwert eingestellt werden, auf welchen dann der Bremsschlupf-Istwert eingeregelt wird. Durch diese Maßnahme werden an der Hinterachse höhere Bremsschlupfwerte zugelassen, welche für Fahrten im Gelände geeigneter sind.

Die Erfindung betrifft auch eine Vorrichtung mit wenigstens einer Bremsschlupfregelungs-Steuereinrichtung, welche zur Ausführung des Verfahrens nach einem der vorhergehenden Ansprüche ausgebildet ist. Diese Vorrichtung beinhaltet insbesondere Stellmittel zum Einstellen der Betriebsarten der Bremsschlupfregelung (ABS) wie Straßenbetriebsart oder Geländebetriebsart.

Weiterhin betrifft die Erfindung auch ein Computerprogrammprodukt, mit Programmteilen zur Ausführung des erfindungsgemäßen Verfahrens, welches auf einem computerlesbaren Aufzeichnungsmedium oder in einer computerlesbaren Aufzeichnungsvorrichtung gespeichert ist.

Weitere die Erfindung verbessernde Maßnahmen werden nachstehend gemeinsam mit der Beschreibung eines bevorzugten Ausführungsbeispiels der Erfindung anhand der Zeichnung näher dargestellt.

### Zeichnung

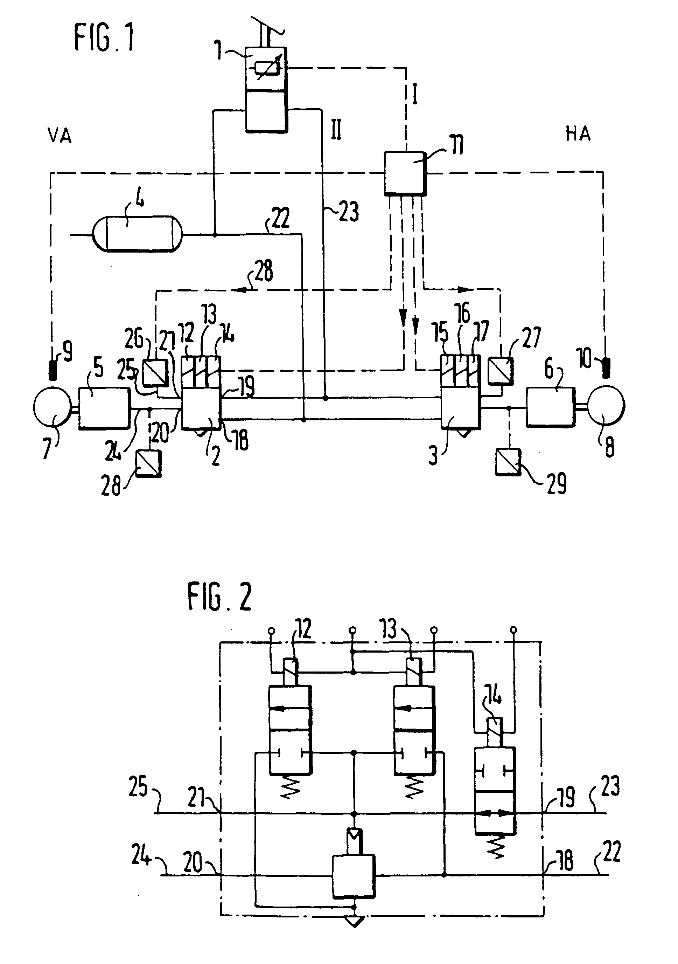

In der Zeichnung zeigt Figur 1 eine schematische Darstellung eines Bremssystems mit ABS gemäß einer bevorzugten Ausführungsform der Erfindung.

### Beschreibung des Ausführungsbeispiels

Die in der Figur gezeigte elektro-pneumatische Bremsanlage eines allradgetriebenen Fahrzeugs hat einen elektro-pneumatischen Bremswertgeber 1, über den ein elektrischer Steuerkreis I und ein pneumatischer Steuerkreis II mit Bremswerten beschickbar sind. Der pneumatische Steuerkreis II führt direkt zu zwei Drucksteuerventilanordnungen 2 und 3, die einerseits an einen Druckluft- Vorratsbehälter 4 und andererseits an je einen RadBremszylinder 5 und 6 angeschlossen sind. Die beiden Bremszylinder 5 und 6 betätigen die Radbremsen von Rädern 7, 8 verschiedener Achsen, beispielsweise einer Vorderachse VA und einer Hinterachse HA. Vereinfachend besitzen die Vorderachse VA und die Hinterachse jeweils nur einen gemeinsamen Steuerkreis I bzw. II.

Beide Räder 7 und 8 sind mit ABS-Drehzahlfühlern 9 und 10 ausgerüstet, die ihre Signale an ein elektronisches Bremssteuergerät 11 abgeben, in welchem auch die ABS-Funktionen implementiert sind. Das Bremssteuergerät 11 ist an den Steuerkreis I und an je drei Elektro-Magnetventile 12, 13, 14 und 15, 16, 17 angeschlossen, die in jede Drucksteuerventilanordnung 2 bzw. 3 integriert sind.

Wie aus Fig.2 hervorgeht, hat jede Drucksteuerventilanordnung 2 und 3 vier pneumatische Anschlüsse 18, 19, 20 und 21, wobei der Anschluss 18 zur Verbindung mit einer vom Vorratsbehälter 4 herangeführten Vorratsleitung 22 dient. An den Anschluss 19 ist über eine Druckluft-Steuerleitung 23 der Bremswertgeber 1 angeschlossen. Der Anschluss 20 führt über eine Bremsleitung 24 zum Bremszylinder 5 und der Anschluss 21 hat über eine Leitung 25 Verbindung mit einem Drucksensor 26 (rechts Drucksensor 27), der andererseits über eine elektrische Leitung 28 an das elektronische Bremssteuergerät 11 angeschlossen ist.

Die beiden Magnetventile 12 und 13 bzw. 15 und 16 dienen, wie die Leitungsführung in der Drucksteuerventilanordnung 2 erkennen lässt, der ABS-Steuerung sowie dem elektrischen Einregeln eines vom Bremswertgeber 1 vorgegebenen Drucks, das Magnetventil 13 bzw. 16 -wenn bestromt - zur Druckanstiegssteuerung und das Magnetventil 12 bzw. 15 - wenn bestromt - der Druckentlastung.

Im Gegensatz dazu ist das Magnetventil 14 bzw. 17 stromlos offen und stellt auf diese Weise sicher, dass die Drucksteuerventilanordnung 2 über die Druckluft-Steuerleitung 23 stromlos angesteuert werden kann. Das Magnetventil 14 bzw. 17 ist ein sogenanntes Rückhalte- oder back-up-Ventil, das bei intakter Elektrik bei Bremsbeginn in Schließstellung geschaltet wird. Bei betätigtem Bremswertgeber 1 wird zunächst das Rückhalte-Magnetventil 14 bzw. 17 in seine bestromte Schließstellung gebracht. Damit wird die Druckluft-Steuerleitung 23 von der Drucksteuerventilanordnung 2 bzw. 3 abgetrennt. Das Magnetventil 13 bzw. 16 wird umgestellt, um vom Vorratsbehälter 4 über die Leitung 22 Druckluft zur Drucksteuerventilanordnung 2 bzw. 3 gelangen zu lassen und diese im Bremssinn umzuschalten. Zum Bremsen wird dann vom Relaisventil 2 bzw. 3 Vorratsluft in die Leitung 24 zum Bremszylinder 5 bzw. 6 geschickt. Der dabei erreichte Ist-Druck wird vom Drucksensor 26 bzw. 27 gemessen und an das elektrische Bremssteuergerät 11 gegeben. Erkennt das Bremssteuergerät 11 auf zu hohen Ist-Druck, wird durch das Magnetventil 12 bzw. 15 ein Druckabbau gesteuert.

Bei normalem Bremsen bei intakter Elektrik schließt also das Magnetventil 14 bzw. 17, sobald der Bremswertgeber 1 betätigt wird. Damit wird der Steuerkreis II unwirksam. Wenn jedoch die Elektrik ausfällt, können die Magnetventile 12, 13, 14 und 15, 16, 17 nicht mehr bestromt werden. Deshalb erfolgt jetzt Druckeinsteuerung über den pneumatischen Steuerkreis II, denn die beiden back-up-Magnetventile 14 bzw. 17 sind offen, wenn sie unbestromt sind.

Die in das Bremssteuergerät 11 implementierten ABS-Steuerroutinen steuern die Drucksteuerventilanordnungen 2 bzw. 3 zum Drucksteigern, Druckhalten bzw. Drucksenken in den Bremszylindern 5, 6 an, um einen optimalen Bremsschlupf an den Rädern 7, 8 einzustellen. Ein solches ABS-Bremssystem ist grundsätzlich bekannt, beispielsweise aus der DE 40 30 980 A1.

Darüber hinaus wird die ABS-Bremsschlupfregelung des Bremssystems in verschiedenen Betriebsarten wie einer Straßenbetriebsart und einer Geländebetriebsart abhängig von Fahrbedingungen betrieben, wobei in der Straßenbetriebsart die Bremsschlupfregelung (ABS) für alle Räder der Hinterachse HA und der Vorderachse VA bzw. 7, 8 gemäß einer Grundeinstellung in Betrieb gesetzt oder aktiviert ist. Mit anderen Worten geben die gerade vorliegenden Fahrbedingungen die jeweilige Betriebsart des ABS vor.

Dabei kann die Geländebetriebsart der Bremsschlupfregelung von einer die Fahrbedingungen des Fahrzeugs mittels Sensorik überwachenden Überwachungseinrichtung im Bremssteuergerät 11 automatisch, d.h. ohne Zutun des Fahrers aktiviert werden, beispielsweise wenn die Sensorik aufgrund der gefahrenen Geschwindigkeit, der Einfederung des Fahrzeugs oder von Beschleunigungssignalen in Vertikalrichtung erkennt, dass das Fahrzeug im Gelände im Gegensatz zu einer ebenen Straße in der Straßenbetriebsart bewegt wird. Alternativ kann die Geländebetriebsart natürlich auch von einer Bedienperson bzw. dem Fahrer des Fahrzeugs mittels einer geeigneten Eingabevorrichtung manuell aktiviert werden, welche mit dem Bremssteuergerät 11 kommuniziert.

Es wird vorgeschlagen, dass auch in der Geländebetriebsart die Bremsschlupfregelung an der Hinterachse HA des Fahrzeugs solange in Betrieb bleibt, bis der Bremsschlupf an wenigstens einem Rad 7 der Vorderachse VA kleiner oder gleich einer vorgegebenen Bremsschlupfgrenze ist und dass bei einem Überschreiten der vorgegebenen Bremsschlupfgrenze durch den Bremsschlupf an dem wenigstens einen Rad 7 der Vorderachse VA die Bremsschlupfregelung an der Hinterachse HA außer Betrieb gesetzt und erst dann wieder in Betrieb gesetzt wird, wenn der Bremsschlupf an dem wenigstens einen Rad 7 der Vorderachse VA wieder kleiner oder gleich der vorgegebenen Bremsschlupfgrenze ist.

Als die an dem wenigstens einem Rad 7 der Vorderachse VA vorgegebene Bremsschlupfgrenze wird bevorzugt ein Bremsschlupfwert gesetzt, welcher im wesentlichen einem Blockieren des Rades 7 entspricht.

Besonders bevorzugt wird in der Geländebetriebsart die Bremsschlupfregelung an dem wenigstens einen Rad 7 der Vorderachse VA außer Betrieb gesetzt, mit der Ausnahme, dass die Signale des Raddrehzahlsensors 9 des wenigstens einen Rades 7 der Vorderachse VA herangezogen werden, um festzustellen, ob der Bremsschlupf an dem wenigstens einen Rad 7 der Vorderachse VA kleiner, gleich oder größer als die vorgegebene Bremsschlupfgrenze ist.

Gemäß einer Alternative bleibt auch in der Geländebetriebsart die Bremsschlupfregelung (ABS) an dem wenigstens einen Rad 7 der Vorderachse VA in Betrieb gesetzt, wobei im Rahmen der an dem wenigstens einen Rad 7 der Vorderachse VA in Betrieb gesetzt bleibenden Bremsschlupfregelung die Signale des Raddrehzahlsensors 9 des wenigstens einen Rades 7 der Vorderachse VA herangezogen werden, um festzustellen, ob der Bremsschlupf an dem wenigstens einen Rad 7 der Vorderachse VA kleiner, gleich oder größer als die vorgegebene Bremsschlupfgrenze ist.

Die im Rahmen der Geländebetriebsart im Betrieb belassene oder befindliche Bremsschlupfregelung an der wenigstens einen Hinterachse HA des Fahrzeugs wird insbesondere auf einen gegenüber der Straßenbetriebsart höheren Bremsschlupf-Sollwert eingestellt werden, auf welchen dann der Bremsschlupf-Istwert eingeregelt wird. Durch diese Maßnahme werden an der Hinterachse HA höhere Bremsschlupfwerte zugelassen, welche für Fahrten im Gelände geeigneter sind.

Insbesondere ist die oben beschriebene, von der Betriebsart (Geländebetriebsart, Straßenbetriebsart) abhängige ABS-Regelung in das Bremssteuergerät 11 implementiert und steuert die Bremsanlage entsprechend.

### Bezugszeichenliste

- 1: Bremswertgeber
- 2: Drucksteuerventilanordnung
- 3: Drucksteuerventilanordnung
- 4: Vorratsbehälter
- 5: Bremszylinder
- 6: Bremszylinder
- 7: Rad
- 8: Rad
- 9: Drehzahlfühler
- 10: Drehzahlfühler
- 11: Bremssteuergerät
- 12: Magnetventil
- 13: Magnetventil
- 14: Magnetventil
- 15: Magnetventil
- 16: Magnetventil
- 17: Magnetventil
- 18: Anschluss
- 19: Anschluss
- 20: Anschluss
- 21: Anschluss
- 22: Vorratsleitung
- 23: Steuerleitung
- 24: Bremsleitung
- 25: Leitung
- 26: Drucksensor
- 27: Drucksensor
- 28: Leitung

## Patentansprüche

1. Verfahren zum Betreiben einer Bremsschlupfregelung (ABS) eines Bremssystems eines Fahrzeugs in verschiedenen Betriebsarten wie einer Straßenbetriebsart und einer Geländebetriebsart abhängig von Fahrbedingungen, wobei in der Straßenbetriebsart die Bremsschlupfregelung an wenigstens einer Hinterachse (HA) und einer Vorderachse (VA) in Betrieb gesetzt ist, **dadurch gekennzeichnet, dass** auch in der Geländebetriebsart die Bremsschlupfregelung an wenigstens einer Hinterachse (HA) des Fahrzeugs solange in Betrieb bleibt, bis der Bremsschlupf an wenigstens einem Rad (7) einer Vorderachse (VA) kleiner oder gleich einer vorgegebenen Bremsschlupfgrenze ist und dass bei einem Überschreiten der vorgegebenen Bremsschlupfgrenze durch den Bremsschlupf an dem wenigstens einen Rad (7) der Vorderachse (VA) die Bremsschlupfregelung an der wenigstens einen Hinterachse (HA) außer Betrieb gesetzt und erst dann wieder in Betrieb gesetzt wird, wenn der Bremsschlupf an dem wenigstens einen Rad (7) der Vorderachse (VA) wieder kleiner oder gleich der vorgegebenen Bremsschlupfgrenze ist.

2. Verfahren nach Anspruch 1, **dadurch gekennzeichnet, dass** in der Geländebetriebsart die Bremsschlupfregelung an dem wenigstens einen Rad (7) der Vorderachse (VA) außer Betrieb gesetzt ist, mit der Ausnahme, dass die Signale eines Raddrehzahlsensors (9) des wenigstens einen Rades (7) der Vorderachse (VA) herangezogen werden, um festzustellen, ob der Bremsschlupf an dem wenigstens einen Rad (7) der Vorderachse (VA) kleiner, gleich oder größer als die vorgegebene Bremsschlupfgrenze ist.

3. Verfahren nach Anspruch 1, **dadurch gekennzeichnet, dass** auch in der Geländebetriebsart die Bremsschlupfregelung an dem wenigstens einen Rad (7) der Vorderachse (VA) in Betrieb bleibt und dass im Rahmen der an dem wenigstens einen Rad (7) der Vorderachse (VA) in Betrieb bleibenden Bremsschlupfregelung die Signale des Raddrehzahlsensors (9) des wenigstens einen Rades (7) der Vorderachse (VA) herangezogen werden, um festzustellen, ob der Bremsschlupf an dem wenigstens einen Rad (7) der Vorderachse (VA) kleiner, gleich oder größer als die vorgegebene Bremsschlupfgrenze ist.

4. Verfahren nach einem der vorhergehenden Ansprüche, **dadurch gekennzeichnet, dass** die Geländebetriebsart der Bremsschlupfregelung von einer die Fahrbedingungen des Fahrzeugs mittels einer Sensorik überwachenden Überwachungseinrichtung oder von einer Bedienperson des Fahrzeugs aktiviert wird.

5. Verfahren nach einem der vorhergehenden Ansprüche, **dadurch gekennzeichnet, dass** die im Rahmen der Geländebetriebsart im Betrieb belassene oder befindliche Bremsschlupfregelung an der wenigstens einen Hinterachse (HA) des Fahrzeugs einen gegenüber der Straßenbetriebsart höheren Bremsschlupf-Sollwert einstellt, auf welchen ein Bremsschlupf-Istwert eingeregelt wird.

6. Verfahren nach einem der vorhergehenden Ansprüche, **dadurch gekennzeichnet, dass** als die an dem wenigstens einem Rad (7) der Vorderachse (VA) vorgegebene Bremsschlupfgrenze ein Bremsschlupfwert gesetzt wird, welcher im wesentlichen einem Blockieren des Rades (7) entspricht.

7. Vorrichtung mit wenigstens einer Bremsschlupfregelungs-Steuereinrichtung (11), welche zur Ausführung des Verfahrens nach einem der vorhergehenden Ansprüche ausgebildet ist.

8. Vorrichtung nach Anspruch 7, **dadurch gekennzeichnet, dass** Stellmittel zum Einstellen der Betriebsarten der Bremsschlupfregelung (ABS) wie Straßenbetriebsart oder Geländebetriebsart vorgesehen sind.

9. Computerprogrammprodukt, mit Programmteilen zur Ausführung des Verfahrens nach einem der Ansprüche 1 bis 6.

10. Computerprogrammprodukt nach Anspruch 8, gespeichert auf einem computerlesbaren Aufzeichnungsmedium oder in einer computerlesbaren Aufzeichnungsvorrichtung.

## Claims

1. A method for operating a brake-slip regulating means (ABS) of a brake system of a vehicle in various operating modes, such as an on-road operating mode and an off-road operating mode, in accordance with driving conditions, wherein, in the on-road operating mode, the brake-slip regulating means is activated on at least one rear axle (HA) and one front axle (VA), **characterized in that**, even in the off-road operating mode, the brake-slip regulating means continues to operate on at least one rear axle (HA) of the vehicle until the brake slip on at least one wheel (7) of a front axle (VA) is less than or equal to a specified brake-slip limit, and that, if the specified brake-slip limit is exceeded by the brake slip on the at least one wheel (7) of the front axle (VA), the brake-slip regulating means is put out of operation on the at least one rear axle (HA) and is not put into operation again until the brake slip on the at least one wheel (7) of the front axle (VA) is again less than or equal to the specified brake-slip limit.

2. The method as claimed in claim 1, **characterized in that** the brake-slip regulating means is put out of operation on the at least one wheel (7) of the front axle (VA) in the off-road operating mode, with the exception that the signals of a wheel speed sensor (9) of the at least one wheel (7) of the front axle (VA) are used to determine whether the brake slip on the at least one wheel (7) of the front axle (VA) is less than, equal to or greater than the specified brake-slip limit.

3. The method as claimed in claim 1, **characterized in that** the brake-slip regulating means continues to operate on the at least one wheel (7) of the front axle (VA), even in the off-road operating mode, and that, in the context of the brake-slip regulating means continuing to operate on the at least one wheel (7) of the front axle (VA), the signals of the wheel speed sensor (9) of the at least one wheel (7) of the front axle (VA) are used to determine whether the brake slip on the at least one wheel (7) of the front axle (VA) is less than, equal to or greater than the specified brake-slip limit.

4. The method as claimed in one of the preceding claims, **characterized in that** the off-road operating mode of the brake-slip regulating means is activated by a monitoring device, which monitors the driving conditions of the vehicle by means of a sensor system, or by a person operating the vehicle.

5. The method as claimed in one of the preceding claims, **characterized in that**, when in operation or when left in operation in the context of the off-road operating mode, the brake-slip regulating means sets a higher desired brake-slip value on the at least one rear axle (HA) of the vehicle than that for the on-road operating mode, and an actual brake-slip value is adjusted to said desired value.

6. The method as claimed in one of the preceding claims, **characterized in that** a brake-slip value which corresponds substantially to locking up of the wheel (7) is set as the brake-slip limit specified on the at least one wheel (7) of the front axle (VA).

7. A device having at least one brake-slip regulation control device (11), which is designed to carry out the method as claimed in one of the preceding claims.

8. The device as claimed in claim 7, **characterized in that** actuating means for setting the operating modes of the brake-slip regulating means (ABS), such as an on-road operating mode or an off-road operating mode, are provided.

9. A computer program product having program segments for carrying out the method as claimed in one of claims 1 to 6.

10. The computer program product as claimed in claim 8 stored on a computer-readable recording medium or in a computer-readable recording device.

## Revendications

1. Procédé de faire fonctionner un dispositif régulateur de dérapage en freinage (système antipatinage ABS) d'un système de freinage d'un véhicule dans des divers modes de fonctionnement, comme un mode de fonctionnement sur la route et un mode de fonctionnement sur le terrain naturel, en fonction des conditions de roulement, dans lequel, dans le mode de fonctionnement sur la route, le dispositif régulateur de dérapage en freinage est mis en fonction à au moins un essieu arrière (HA) et un essieu avant (VA), **caractérisé en ce que** le dispositif régulateur de dérapage en freinage reste en fonction à au moins un essieu arrière (HA) du véhicule aussi dans le mode de fonctionnement sur le terrain naturel jusqu'à ce que le dérapage en freinage à au moins une roue (7) d'un essieu avant (VA) est plus petit que ou égal à une limite de dérapage en freinage prédéterminée, et **en ce que** quand ladite limite de dérapage en freinage prédéterminée est dépassée, le dérapage en freinage à ladite au moins une roue (7) de l'essieu avant (VA) met le dispositif régulateur de dérapage en freinage audit au moins un essieu arrière (HA) hors service et ne le met en service encore que quand le dérapage en freinage à ladite au moins une roue (7) dudit essieu avant (VA) est encore plus petit que ou égal à ladite limite de dérapage en freinage prédéterminée.

2. Procédé selon la revendication 1, **caractérisé en ce que** dans le mode de fonctionnement sur le terrain naturel, ledit régulateur de dérapage en freinage à ladite au moins une roue (7) de l'essieu avant (VA) est mis hors service, à l'exception que les signaux d'un capteur (9) de la vitesse de rotation de ladite roue de ladite au moins une roue (7) de l'essieu avant (VA) sont utilisés afin d'établir si le dérapage en freinage à ladite au moins une roue (7) de l'essieu avant (VA) est plus petit que, égal à ou plus grand que ladite limite de dérapage en freinage prédéterminée.

3. Procédé selon la revendication 1, **caractérisé en ce que** le régulateur de dérapage en freinage à ladite au moins une roue (7) dudit essieu avant (VA) reste en service aussi dans le mode de fonctionnement sur le terrain naturel, et **en ce que** dans le cadre du réglage de dérapage en freinage, qui reste opératif à ladite au moins une roue (7) de l'essieu avant (VA), les signaux dudit capteur (9) de vitesse de rotation de roue de ladite au moins une roue (7) dudit essieu avant (VA) sont utilisés afin d'établir si le dérapage en freinage à ladite au moins une roue (7) de l'essieu avant (VA) est plus petit que, égal à ou plus grand que ladite limite de dérapage en freinage prédéterminée.

4. Procédé selon une quelconque des revendications précédentes, **caractérisé en ce que** le mode de fonctionnement sur le terrain naturel dudit régulateur de dérapage en freinage est activé par un dispositif de surveillance pour le monitorage des conditions de roulement du véhicule moyennant un système de capteurs, ou par un opérateur du véhicule.

5. Procédé selon une quelconque des revendications précédentes, **caractérisé en ce que** le réglage du dérapage en freinage laissé ou se trouvant en service dans le cadre du mode de fonctionnement sur le terrain naturel ajuste une valeur de consigne de dérapage en freinage audit au moins un essieu arrière (HA) du véhicule, qui est plus haut qu'une valeur de consigne de dérapage en freinage dans le mode de fonctionnement sur la route, à la valeur réelle de dérapage en freinage étant réglée sur cette valeur de consigne.

6. Procédé selon une quelconque des revendications précédentes, **caractérisé en ce qu'**une valeur de dérapage en freinage est réglée en tant que ladite limite de dérapage en freinage prédéterminée à ladite au moins une roue (7) de l'essieu avant, qui correspond essentiellement au blocage de ladite roue (7).

7. Dispositif comprenant au moins un moyen de commande (11) du régulateur de dérapage en freinage, qui est configuré pour la réalisation du procédé selon une quelconque des revendications précédentes.

8. Dispositif selon la revendication 7, **caractérisé en ce que** des moyens de réglage des modes de fonctionnement dudit régulateur de dérapage en freinage (ABS), comme le mode de fonctionnement sur la route ou le mode de fonctionnement sur le terrain naturel.

9. Produit de programme informatique aux segments de programme pour la réalisation du procédé selon une quelconque des revendications 1 à 6.

10. Produit de programme informatique selon la revendication 9, mis en mémoire sur un support d'enregistrement lisible par ordinateur ou dans un dispositif d'enregistrement lisible par ordinateur.
